# EUROPEAN PATENT APPLICATION

(11) **EP 3 064 074 A1**
(43) Date of publication of application: **07.09.2016**
(21) Application number: 14858806.4
(22) Date of filing: 29.10.2014
(51) Int. Cl.: A23N 1/02, A47J 19/04, A47J 43/25

(54) **OPERATION METHOD FOR STRAINER**

(30) Priority: 31.10.2013 JP 2013227753
(71) Applicant: Nepuree Corporation, Tokyo 104-0031 (JP)
(72) Inventor: KANO Tsutomu, Tokyo 104-0031 (JP); TANIWAKI Ken, Tokyo 104-0031 (JP); YAMASHITA Masateru, Tokyo 104-0031 (JP)
(74) Representative: Kilian Kilian & Partner
(86) International application number: PCT/JP2014/078793
(87) International publication number: WO 2015/064650

(57) **Abstract**

To provide a method for operating a strainer that uses a centrifugal force generated by the rotation of a bottomed cylindrical vessel (3) having filtering holes (3d) in a side surface and can eliminate the clogging of the filtering holes and maintain the optimal straining effect while maintaining the optimal pressure and duration of pressing food ingredients, and to further provide an automatic strainer device. Provided is a method for operating a strainer, the strainer including: a vertical, bottomed cylindrical vessel that is supported so as to be rotatable around a central axis and has filtering holes bored in a circumferential plate; rotary pressers (24, 25) that are located inside the bottomed cylindrical vessel and supported so as to be rotatable around the central axis while being in contact with or closer to an inner circumferential surface of the circumferential plate; and a filtrate catching member that catches a filtrate discharged through the filtering holes of the bottomed cylindrical vessel to the outside of the vessel, the method including the step of, while rotating the bottomed cylindrical vessel, which contains an object to be strained input therein, in a predetermined rotation direction at a first rotation speed, rotating the rotary pressers in the same rotation direction as the bottomed cylindrical vessel at a second rotation speed different from the first rotation speed by a predetermined speed difference.

## Description

### Technical Field

The present invention relates to a strainer operation method suitable for straining, for example, food ingredients that are softened by heating in superheated steam etc., and to an automatic strainer device.

### Background Art

The applicant has found that, if a food ingredient (such as a fruit, a vegetable or a grain) is softened by heating in superheated steam without or with low concentration of oxygen and then strained through a strainer, a liquid or puree food product retaining the functionality of the food ingredient or having an additional functionality can be produced (see Patent Literature 1).

Softened as they are through heat treatment with superheated steam, such food ingredients for liquid or puree food products still have a wide variety of physical properties (e.g., high or low water content, viscosity, hardness, and fiber content, with or without seeds and skins, large or small particles, etc.), and it is therefore necessary to take the physical properties of each food ingredient into account in the straining process.

However, it entails immeasurable time and cost to design and produce a strainer of optimal structure for every food ingredient in every case, which has led to a demand for the development of a strainer as versatile as possible in view of the physical properties of food ingredients.

Meanwhile, for its simple construction and ease of control, a type of strainer is adopted to strain various food ingredients. This type of strainer operates in such a way that a bottomed cylindrical vessel having a large number of filtering holes in a circumferential plate thereof is rotated at high speed, with the upper opening facing upward, so that an object to be strained, which is input through the upper opening into the vessel, is pressed under the centrifugal force against the inner circumferential surface of the circumferential plate, and thereby passed through the filtering holes and strained (e.g., see Patent Literature 2).

### Citation List

### Patent Literature

Patent Literature 1 Japanese Patent Laid-Open No. 2009-178168
Patent Literature 2 Japanese Patent Laid-Open No. 2010-022714

### Summary of Invention

### Technical Problem

In the operation of this type of strainer, it is essential to eliminate the clogging of the filtering holes by rubbing the inner circumferential surface of the circumferential plate in proper cycles with a presser of an appropriate shape, while maintaining the optimal pressure and duration of pressing the food ingredients under the centrifugal force against the inner circumferential surface of the circumferential plate having the filtering holes.

Specifically, in the case of softened food ingredients having comparatively high water content and low viscosity, the food ingredients can be passed smoothly through the filtering holes without significantly increasing the pressure of pressing the food ingredients under the centrifugal force or extending the duration of pressing the food ingredients. Accordingly, it is possible to realize a smooth straining process without raising the rotation speed of the vessel to increase the centrifugal force or extending the cycle of rubbing the filtering surface. By contrast, in the case of food ingredients having comparatively low water content and high viscosity, the food ingredients cannot be smoothly passed through the filtering holes unless the pressure of pressing the food ingredients under the centrifugal force is increased as well as the duration of pressing the food ingredients is extended. Accordingly, it is not possible to realize an efficient straining process without considerably raising the rotation speed of the vessel to increase the centrifugal force as well as providing a comparatively long cycle of rubbing the filtering surface.

However, in the case of the conventional strainer as shown in Patent Literature 2, the presser (guide plate 10) remains stationary relative to the rotation of the bottomed cylindrical vessel (rotary teeth 7). Therefore, even if the rotation speed of the bottomed cylindrical vessel is made changeable, it is not possible to set any optimal relation between the rotation speed of the bottomed cylindrical vessel (i.e., centrifugal force) and the relative speed between the vessel and the presser (i.e., execution cycle of rubbing) because the relation is to be uniquely determined, which makes this strainer unsuitable for straining the aforementioned softened food ingredients having various physical properties.

An object of the present invention, which has been made in view of the above technical background, is to provide a method for operating this type of strainer that uses a centrifugal force generated by the rotation of a bottomed cylindrical vessel having filtering holes in a side surface, and can eliminate the clogging of the filtering holes and maintain the optimal straining effect by rubbing the inner circumferential surface of the circumferential plate in proper cycles while maintaining the optimal pressure and duration of pressing food ingredients against the inner circumferential surface of the circumferential plate, and to further provide a puree food product manufacturing method and an automatic strainer device using the same method.

Any person skilled in the art would be able to readily understand the further purposes and advantageous effects of the present invention by referring to the following description of the specification and the accompanying drawings.

### Solution to Problem

The above technical problem is considered to be solved by a strainer operation method and an automatic strainer device having the following configurations.

That is, according to the present invention, there is provided a method for operating a strainer, the strainer including: a vertical, bottomed cylindrical vessel that is supported so as to be rotatable around a central axis and has filtering holes bored in a circumferential plate thereof; a rotary presser that is located inside the bottomed cylindrical vessel and supported so as to be rotatable around the central axis while being in contact with or closer to an inner circumferential surface of the circumferential plate; and a filtrate catching member that catches a filtrate discharged through the filtering holes of the bottomed cylindrical vessel to the outside of the vessel, the method including the step of, while rotating the bottomed cylindrical vessel, which contains an object to be strained input therein, in a predetermined rotation direction at a first rotation speed, rotating the rotary presser in the same rotation direction as the bottomed cylindrical vessel at a second rotation speed different from the first rotation speed by a predetermined speed difference.

According to this configuration (method invention), the rotary presser moves in the same direction as or the opposite direction from the predetermined rotation direction relative to the inner circumferential surface of the circumferential plate of the bottomed cylindrical vessel, at a speed equivalent to the speed difference between the first rotation speed and the second rotation speed. Accordingly, to whichever value the first rotation speed may be set to produce a centrifugal force corresponding to a desired pressing pressure, any cycle of rubbing the inner circumferential surface of the circumferential plate can be set as long as only the second rotation speed is set properly. Thus, it is possible to eliminate the clogging of the filtering holes and maintain the optimal straining effect by rubbing the inner circumferential surface of the circumferential plate having the filtering holes in proper cycles, while maintaining the optimal pressure and duration of pressing the food ingredients against the inner circumferential surface of the circumferential plate.

In a preferred embodiment of the strainer operation method according to the present invention, the second rotation speed may be lower than the first rotation speed (Embodiment 1 of the method invention).

According to this configuration (Embodiment 1 of the method invention), the second rotation speed may be lower than the first rotation speed. Thus, it is possible to reduce the energy consumption of a rotation driving source used for achieving the second rotation speed, as well as to suppress the scattering of an extra strained object resulting from the rubbing process, as the rubbing direction is a direction in which the rotation decelerates.

In a preferred embodiment of the strainer operation method according to the present invention, the first rotation speed may be set such that a centrifugal force generated by the rotation exerts a pressing pressure, which is suitable for the object to be strained, on the object to be strained toward the inner circumferential surface of the circumferential plate, and the speed difference between the first rotation speed and the second rotation speed may be set such that, when the inner circumferential surface of the circumferential plate is rubbed with that speed difference, the duration of the pressing pressure corresponds to a duration suitable for the object to be strained (Embodiment 2 of the method invention).

According to this configuration (Embodiment 2 of the method invention), even when the physical properties of food ingredients (e.g., fruits, vegetables, grains, etc.) softened by heat treatment with superheated steam are specifically taken into account, these softened food ingredients can be strained efficiently.

When looked from another side, the present invention can also be regarded as a puree food product manufacturing method. That is, this puree food product manufacturing method is a method in which a puree food product as the filtrate is obtained by implementing the strainer operation method according to the present invention on the object to be strained that is softened food ingredients produced by exposing vegetables, fruits, and/or grains to a superheated steam atmosphere.

According to this configuration (manufacturing method invention), it is possible to efficiently manufacture high-quality puree food products.

When looked from another side, the present invention can also be regarded as an automatic strainer device. That is, this automatic strainer device includes: a vertical, bottomed cylindrical vessel that is supported so as to be rotatable around a central axis and has filtering holes bored in a circumferential plate thereof; a rotary presser that is located inside the bottomed cylindrical vessel and supported so as to be rotatable around the central axis while being in contact with or closer to an inner circumferential surface of the circumferential plate; a filtrate catching member that catches a filtrate discharged through the filtering holes of the bottomed cylindrical vessel to the outside of the vessel; a first rotation driving source that can rotate the bottomed cylindrical vessel in a predetermined direction; a second rotation driving source that can rotate the rotary presser in the same direction as the bottomed cylindrical vessel; a manipulation part that specifies the rotation speed of the bottomed cylindrical vessel and the rotation speed of the rotary presser; and a control part that controls the rotation speed of the bottomed cylindrical vessel and the rotation speed of the rotary presser to the speeds specified by the manipulation part (device invention).

According to this configuration (device invention), the rotary presser moves in the same direction as or the opposite direction from the predetermined rotation direction relative to the inner circumferential surface of the circumferential plate of the bottomed cylindrical vessel, at a speed equivalent to the speed difference between the first rotation speed and the second rotation speed. Accordingly, to whichever value the first rotation speed may be set to produce a centrifugal force corresponding to a desired pressing pressure, any cycle of rubbing the inner circumferential surface (filtering surface) of the circumferential plate can be set as long as only the second rotation speed is set properly. Thus, it is possible to eliminate the clogging of the filtering holes and maintain the optimal straining effect by rubbing the inner circumferential surface of the filtering holes in proper cycles, while maintaining the optimal pressure and duration of pressing the food ingredients against the filtering holes.

In a preferred embodiment of the automatic strainer device according to the present invention, the rotary presser may be configured to exert the effect of pressing the object to be strained against an inner circumferential surface of the circumferential plate due to a difference in rotation speed between the rotary presser and the bottomed cylindrical vessel (Embodiment 1 of the device invention).

According to this configuration (Embodiment 1 of the device invention), it is possible to properly perform the cyclical rubbing process on the inner circumferential surface of the circumferential plate by effectively using the difference in rotation speed between the rotary presser and the bottomed cylindrical vessel.

In a preferred embodiment of the automatic strainer device according to the present invention, the rotary presser may have a straight edge that is in contact with or closer to the inner circumferential surface of the circumferential plate, and a curved guide surface that continues to the straight edge and has an arc shape in cross-section extending along the inner circumferential surface of the circumferential plate while gradually separating from the inner circumferential surface (Embodiment 2 of the device invention).

According to this configuration (Embodiment 2 of the device invention), as the bottomed cylindrical vessel and the rotary presser rotate relative to each other, the object to be strained adhering to the inner circumferential surface of the circumferential plate is suctioned into the gap between the inner circumferential surface of the circumferential plate and the curved guide surface of the rotary presser, and eventually squeezed and pressed between the straight edge of the presser and the inner circumferential surface of the circumferential plate. Thus, it is possible to properly perform the cyclical rubbing process on the inner circumferential surface of the circumferential plate by effectively using the difference in rotation speed between the rotary presser and the bottomed cylindrical vessel.

In a preferred embodiment of the automatic strainer device according to the present invention, a spiral guide groove may be formed in the curved guide surface (Embodiment 3 of the device invention).

According to this configuration (Embodiment 3 of the device invention), it is possible to efficiently send the object to be strained, which is stored inside the bottomed cylindrical vessel, into the gap between the inner circumferential surface of the circumferential plate and the curved guide surface of the rotary presser.

In a preferred embodiment of the automatic strainer device according to the present invention, the automatic strainer device may further have an object-to-be-strained input tube that is coaxial with the central axis of the bottomed cylindrical vessel, is suspended from above the bottomed cylindrical vessel into the vessel, and serves also as a rotating shaft of the rotary presser, and the second rotation driving source may rotate the rotary presser through the input tube (Embodiment 4 of the device invention).

According to this configuration (Embodiment 4 of the device invention), it is possible to slide the rotary presser along the inner circumferential surface of the circumferential plate of the bottomed cylindrical vessel by a simple structure. Moreover, since the rotating shaft of the rotary presser serves also as the tube through which the object to be strained is input into the vessel, it is possible to supply the object to be strained to a central part of the vessel, and disperse the object to be strained evenly and radially under the centrifugal force to distribute it toward the inner circumferential surface of the circumferential plate.

In the embodiment (Embodiment 1 of the device invention), the rotary presser may be provided at a lower end part of the object-to-be-strained input tube, and mounted on a lower surface of a lid plate that closes the upper opening of the bottomed cylindrical vessel (Embodiment 5 of the device invention).

According to this configuration (Embodiment 5 of the device invention), the upper opening of the vessel is always closed by the lid plate while the rotary presser is rotating, and thus the object to be strained is prevented from spilling out of the vessel.

In a preferred embodiment of the automatic strainer device according to the present invention, an object-to-be-strained tray that serves as a receiver of the object to be strained and has a chute opening leading to an upper end opening of the input tube may be provided at an upper end part of the input tube (Embodiment 6 of the device invention).

According to this configuration (Embodiment 6 of the device invention), it is possible to easily send the object to be strained to a supply tube by spreading food ingredients containing water etc., which is the object to be strained, over the tray, and then pushing the food ingredients toward the chute opening in appropriate amounts.

In a preferred embodiment of the automatic strainer device according to the present invention, there may be a plurality of rotary pressers, and the plurality of rotary pressers may be disposed at equiangular intervals along the inner circumference of the bottomed cylindrical vessel (Embodiment 7 of the device invention).

According to this configuration (Embodiment 7 of the device invention), the weights of the plurality of rotary pressers are well balanced, which allows a scraping blade to stably come into sliding contact with the inner circumferential surface of the vessel without wobbling while rotating.

In a preferred embodiment of the automatic strainer device according to the present invention, the filtrate catching member may include a cylindrical cover body with an open bottom that surrounds the outer circumference of the bottomed cylindrical vessel with an appropriate clearance therebetween and prevents the scattering of a filtrate discharged through the filtering holes, and a collection tray that serves as a receiver of the filtrate falling through the bottom opening of the cylindrical cover body (Embodiment 8 of the device invention).

According to this configuration (Embodiment 8 of the device invention), in the case where the filtrate discharged through the filtering holes has comparatively high fluidity or low viscosity, such filtrate can be collected in the collection tray by receiving the filtrate on the inner circumferential surface of the cylindrical cover body and immediately letting it fall.

In the above embodiment (Embodiment 8 of the device invention), the cylindrical cover body may be a circular cylindrical body and supported so as to rotate coaxially and integrally with a first inner surface scraping member, and the inner surface scraping member may be fixed at a predetermined position along the inner circumference of the shield body such that a scraping blade thereof slides along an inner circumferential surface of the circular cylindrical body (Embodiment 9 of the device invention).

According to this configuration (Embodiment 9 of the device invention), even when the filtrate discharged through the filtering holes has comparatively low fluidity or high viscosity, the filtrate discharged through the filtering holes and then adhering to the inner surface of the circular cylindrical body constituting the cylindrical cover body is scraped off by the scraping blade of the inner surface scraping member as the circular cylindrical body rotates. Thus, the filtrate can be collected in the strained object tray.

In the above embodiment (Embodiment 9 of the device invention), the fixing position of the inner surface scraping member may correspond to the chute opening of the strained object tray (Embodiment 10 of the device invention).

According to this configuration (Embodiment 10 of the device invention), the filtrate scraped off by the scraping blade of the inner surface scraping member is directly gathered at the chute opening of the strained object tray, so that subsequent collection work is easy.

In a preferred embodiment of the automatic strainer device according to the present invention, an outer surface scraping member may be fixed at a predetermined position along the outer circumference of the bottomed cylindrical vessel such that a scraping blade thereof slides along an outer circumferential surface of the bottomed cylindrical vessel (Embodiment 11 of the device invention).

According to this configuration (Embodiment 11 of the device invention), even when the filtrate has comparatively low fluidity or high viscosity, the filtrate pushed out through the filtering holes and then sticking to the outlet side of the filtering holes is scraped off by the scraping blade of the outer surface scraping member as the bottomed cylindrical vessel rotates, and the filtrate can be collected in the strained object tray.

In the above embodiment (Embodiment 11 of the device invention), the fixing position of the outer surface scraping member may correspond to the chute opening of the strained object tray (Embodiment 12 of the device invention).

According to this configuration (Embodiment 12 of the device invention, the filtrate scraped off by the scraping blade of the outer surface scraping member is directly gathered at the chute opening of the strained object tray, so that subsequent collection work is easy.

### Advantageous Effects of Invention

According to the present invention, the rotary presser moves in the same direction as or the opposite direction from the predetermined rotation direction relative to the inner circumferential surface of the circumferential plate of the bottomed cylindrical vessel, at a speed equivalent to the speed difference between the first rotation speed and the second rotation speed. Accordingly, to whichever value the first rotation speed may be set to produce a centrifugal force corresponding to a desired pressing pressure, any cycle of rubbing the inner circumferential surface of the circumferential plate can be set as long as only the second rotation speed is properly set. Thus, it is possible to eliminate the clogging of the filtering holes and maintain the optimal straining effect by scraping the inner circumferential surface of the circumferential plate having the filtering holes in proper cycles, while maintaining the optimal pressure and duration of pressing the food ingredients against the inner circumferential surface of the circumferential plate.

### Brief Description of Drawings

[Figure 1] Figure 1 is an external side view of the entire strainer (with an elevator unit at a raised position).
[Figure 2] Figure 2 is an external side view of the entire strainer (with the elevator unit at a lowered position).
[Figure 3] Figure 3 is an enlarged perspective view including a supply part, a processing part, and a collection part of the strainer (with the elevator unit at the lowered position).
[Figure 4] Figure 4 is a partially cutaway, enlarged sectional view showing rotary pressers inside the processing part (at a retracted position)
[Figure 5] Figure 5 is a partially cutaway, enlarged sectional view showing the rotary pressers inside the processing part (at a protruding position).
[Figure 6] Figure 6 is an enlarged perspective view of the rotary pressers of the strainer as seen from obliquely above.
[Figure 7] Figure 7 is an enlarged perspective view of the rotary pressers of the strainer as seen from obliquely below.
[Figure 8] Figure 8 is a block diagram showing the configuration of an electrical system of the strainer.

### Description of Embodiments

In the following, one preferred embodiment of a strainer operation method and an automatic strainer device for implementing the method according to the present invention will be described in detail with reference to the accompanying drawings.

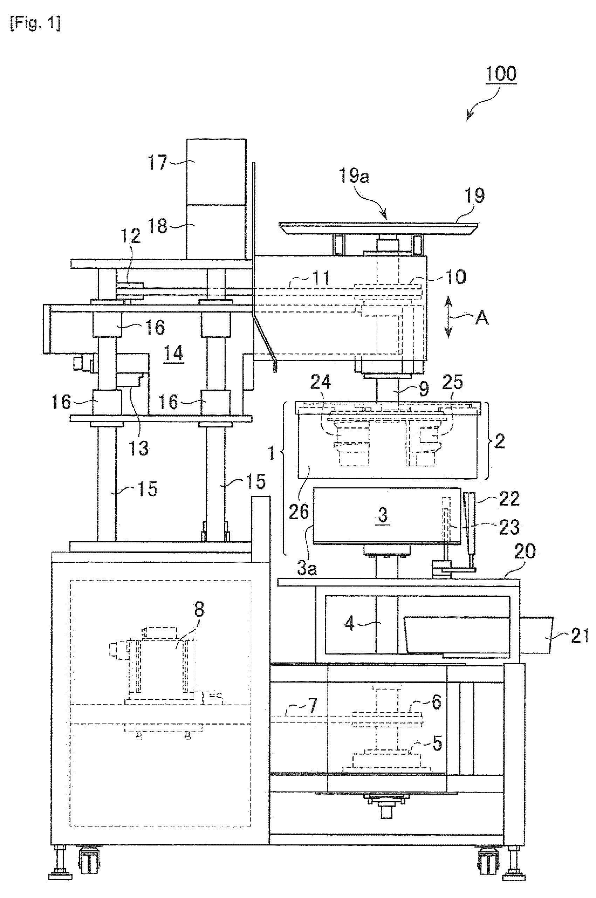

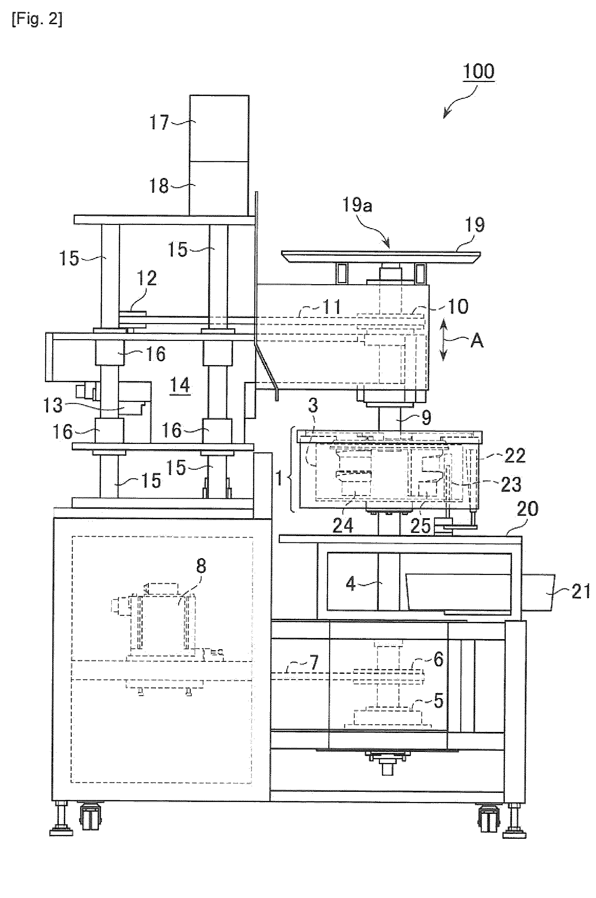

As shown in Figure 1 and Figure 2, a strainer 100 includes a processing part 1 that serves a straining process. The processing part 1 includes an elevator unit 2 that can be raised and lowered within a predetermined stroke range, and a vessel 3 in which an object to be strained is accommodated. Here, examples of the object to be strained include vegetables (e.g., pumpkins, soybeans, chickpeas, carrots, cabbages, spinaches, garland chrysanthemums, garlics, etc.), fruits (mangos, melons, strawberries, raspberries, blueberries, bananas, etc.), and grains (rice, wheat, sweet potatoes, potatoes, etc.) that have been softened by heating in a superheated steam atmosphere.

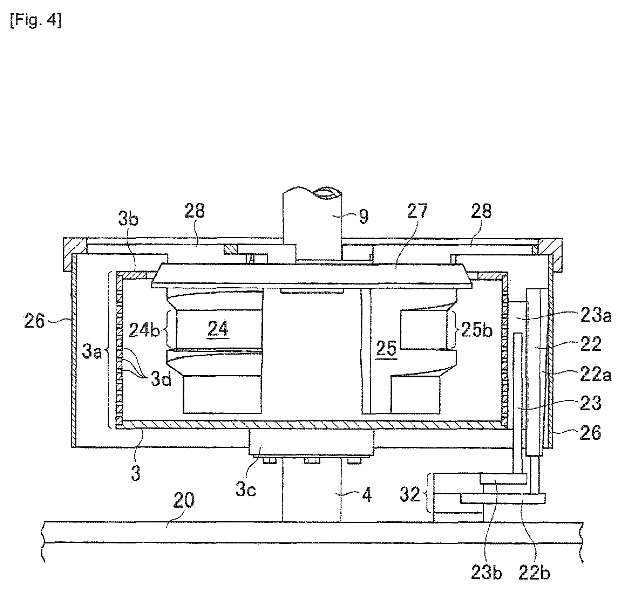

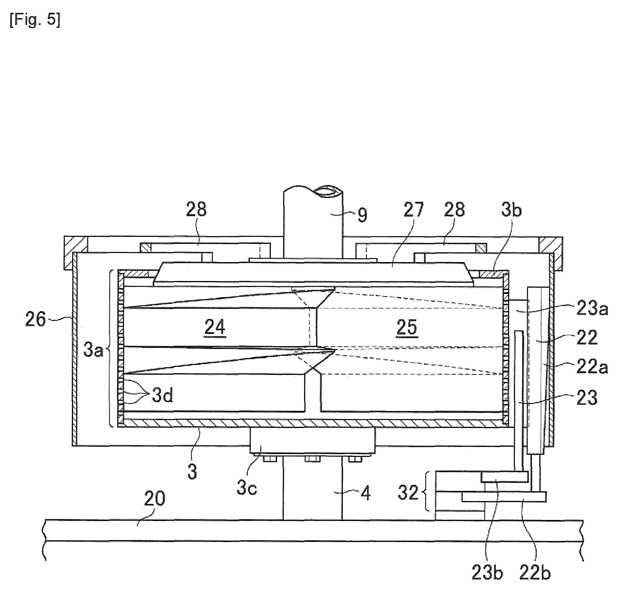

In the example shown in the drawings, the vessel 3 is a vertically-positioned, bottomed cylindrical body of which the height is comparatively small (the diameter-to-depth ratio is about 3 to 1) and the upper side is open, and a large number of filtering holes 3d are bored in a circumferential plate 3a surrounding the vessel 3 (see Figure 4 and Figure 5). As the material of the vessel 3, a material suitable to be washed, such as aluminum or stainless steel, is used in view of food sanitation. The diameter, density, and form of dispersion of the filtering holes 3d in the circumferential plate 3a can be appropriately selected according to the physical properties of the object to be strained. To form the filtering holes, an appropriate method can be adopted; for example, a stainless steel plate with holes already punched therein may be used, or an aluminum die-cast product formed into a bottomed cylindrical shape may be drilled later.

The vessel 3 is firmly fixed, with its opening facing upward, through a bracket 3c to an upper end part of a lower shaft 4 that protrudes vertically upward. The lower shaft 4 is supported through a thrust bearing 5 on a pedestal, which supports the entire strainer, so as to be rotatable in both directions (clockwise and counterclockwise directions) while keeping the vertical position. The lower shaft 4 can be driven by a servomotor 8 disposed on a side part of the pedestal to rotate at a specified speed in both directions through a driving pulley (not shown), a timing belt 7, and a driven pulley 6 in this order.

As will be described later, the elevator unit 2 is configured by integrally incorporating two rotary pressers 24, 25 and a circular cylindrical cover body 26. The elevator unit 2 is fixed to a lower end part of an upper shaft 9 that protrudes from an elevator platform 14 so as to be suspended vertically downward. The upper shaft 9 is a hollow tube, and functions also as an input tube through which the object to be strained is input into the vessel 3, and is supported through a thrust bearing (not shown), which is incorporated in the elevator platform 14, so as to be rotatable in both directions (clockwise and counterclockwise directions) while maintaining the vertical position. The elevator platform 14 is supported so as to be able to be raised and lowered while maintaining the horizontal position through a sliding mechanism composed of guide rods 15 and guide sleeves 16, and can be raised and lowered as indicated by the arrow A in the drawings by an elevator driving mechanism using a ball screw mechanism 17 and a servomotor 18.

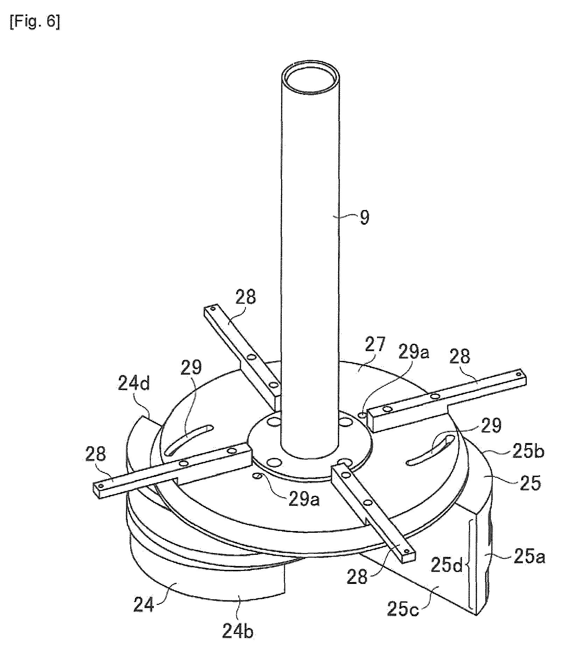

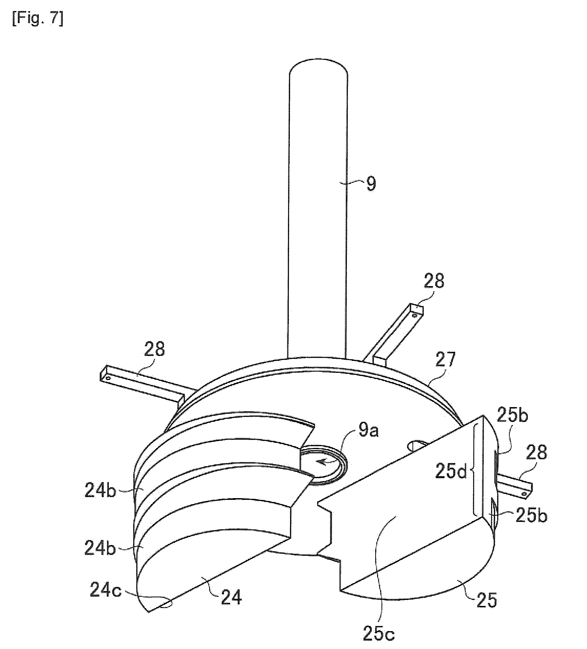

As shown in Figure 6 and Figure 7, a disc-shaped lid plate 27 that closes the upper opening of the vessel 3 and prevents the object to be strained accommodated inside the vessel from scattering to the outside of the vessel during operation is fixed in a horizontal position to the lower end part of the upper shaft 9. The two rotary pressers 24, 25 are mounted, 180 degrees apart from each other, on the lower surface of the lid plate 27. The pressers 24, 25 have a substantially semicircular columnar shape like that of a solid columnar body cut at an eccentric position in parallel to the axis, and have flat surfaces 24c, 25c and curved surface parts 24a, 25a of an arc shape in cross-section. The rotary pressers 24, 25 are mounted on the lower surface of the lid plate 27 through bolts 29a, and with pins (not shown) inserted into arc-shaped guide slots 29 of the lid plate, the rotary pressers 24, 25 can be protruded to and retracted from the outer circumferential edge portion of the disc-shaped lid plate 27 while being turned within a predetermined angular range. The rotary pressers 24, 25 are thus allowed to protrude and retract while turning because, if the pressers 24, 25 are in the protruded state when lowering the elevator unit 2, the pressers 24, 25 interfere with an anti-scattering inward flange 3b that protrudes from the circumferential edge of the inlet opening of the vessel toward the center of the vessel. That is, the pressers 24, 25 are retracted so as to pass through the inlet opening when the pressers 24, 25 are lowered and enter the vessel 3, and after entering the vessel 3, the pressers 24, 25 are protruded, so that the straight edges 24c, 25c thereof come closer to or into contact with the inner circumferential surface of the circumferential plate 3a of the vessel 3 and the curved guide surfaces 24a, 25a having an arc-shaped cross-section extend so as to gradually separate from the inner circumferential surface of the circumferential plate 3a.

As shown in Figure 4 to Figure 7, two of each of spiral guide grooves 24b, 25b are formed in the curved guide surfaces 24a, 25a having an arc-shaped cross-section of the rotary pressers 24, 25. If the guide grooves 24b, 25b are present, when the pressers 24, 25 rotate in the clockwise direction as seen from above and at a lower speed than the vessel 3, with the vessel 3 filled to some level with the object to be strained, the object to be strained stored in the vessel 3 is guided so as to be gradually suctioned into the tapered gap between the curved guide surfaces 24a, 25a of the pressers and the inner circumferential surface of the circumferential plate 3a of the vessel, and the object to be strained is then pressed through the straight edges 24d, 25d against the inner circumferential surface of the circumferential plate 3a, which serves as the filtering surface, at a moderate pressure.

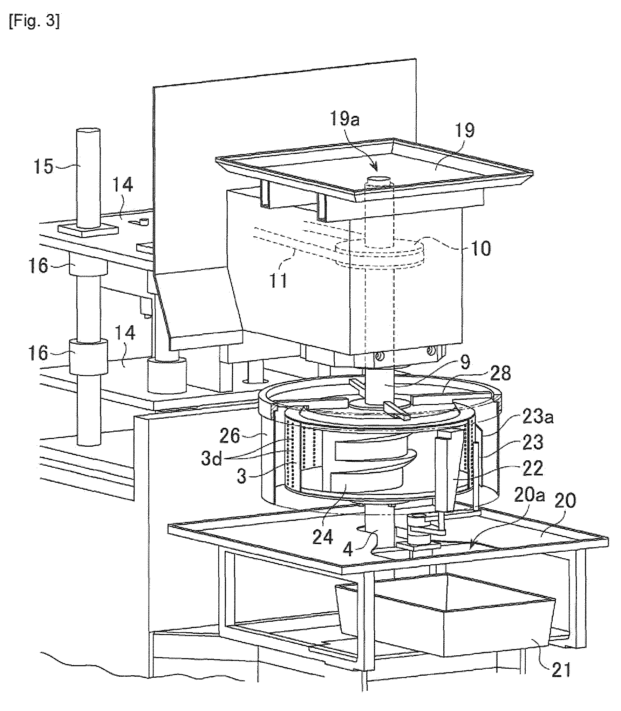

As shown in Figure 3 to Figure 5, the circular cylindrical cover body 26 is disposed on the outer side around the vessel 3. The cover body 26 functions as a catching member that catches a filtrate by receiving the filtrate discharged through the filtering holes 3d of the circumferential plate 3a of the vessel 3 and causing the filtrate to fall downward. The cover body 26 is coupled at its upper part to the lid plate 27 through a radial coupling bar 28. Accordingly, the cover body 26 rotates integrally with the rotary pressers 24, 25 with a certain clearance therebetween on the outer side of the vessel 3. Instead of rotating the circular cylindrical cover body 26 integrally with the rotary pressers 24, 25, another motive power source may be used to rotate the circular cylindrical cover body 26.

As shown in Figure 3 to Figure 5, an inner surface scraping member 22 that scrapes a filtrate adhering to the inner circumferential surface of the circular cylindrical cover body 26 and an outer surface scraping member 23 that scrapes a filtrate adhering to the outer circumferential surface of the circumferential plate 3a of the bottomed cylindrical vessel 3 are disposed between the outer circumferential surface of the vessel 3 and the inner circumferential surface of the circular cylindrical cover body 26. The scraping members 22, 23 are supported on a turning mount 32 through levers 22b, 23b, respectively. Thus, it is possible to select between a scraping activated state and an inactivated state by appropriately turning the levers 22b, 23b and bringing scraping blades 22a, 23a closer to or away from the surfaces. This is because, depending on the properties of the object to be strained, the filtrate does not always adhere to the corresponding inner circumferential surface or outer circumferential surface.

As shown in Figure 1 to Figure 3, a supply tray 19 that receives and guides the object to be strained into the input tube 9 is mounted in a horizontal position at an upper end part of the upper shaft 9 that serves also as the input tube. The supply tray 19 has a chute opening 19a at a central part that guides the object to be strained into the input tube 9. A collection tray 20 that receives the filtrate caught and caused to fall by the circular cylindrical cover body 26 is disposed in a horizontal position under the vessel 3. The collection tray 20 has a chute opening 20a disposed at a position on the near side, and the filtrate scraped by the scraping members 22, 23 described above falls around the chute opening 20a. A drawer-type collection box 21 in which the filtrate falling from the chute opening 20a of the collection tray 20 is disposed under the chute opening 20a. All the filtrate resulting from the straining process is gathered in the collection tray 20.

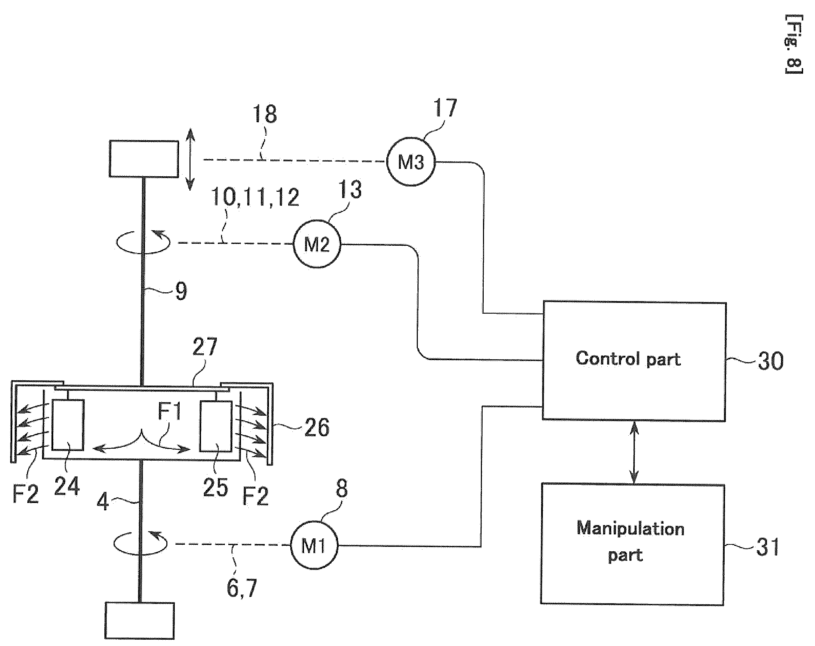

As shown in Figure 8, an electrical system of the strainer includes a manipulation part 31 used for various commanding operations, the servomotor (M1) 8 that rotates the lower shaft 4, a servomotor (M2) 13 that rotates the upper shaft 9, the servomotor (M3) 17 that raises and lowers the elevator platform 14, and a control part 30 that controls the three servomotors 8, 13, 17 such that the operation form is as commanded by the manipulation part 31. As known to those skilled in the art, the control part in this type of system can be realized by a combination of a programmable controller and servomotor control, and the manipulation part can be realized by a programmable display (programmable terminal) that is an accessory of a programmable controller, or the like.

Next, the workings of the automatic strainer device composed of the strainer 100 of the above configuration and the control system (see Figure 8) will be described.

Through a predetermined operation at the manipulation part 59, the elevator unit 2 is lowered from the raised position (see Figure 1) to the lowered position (see Figure 2) by the workings of the ball screw mechanism 18 and the servomotor 17. As described above, the rotary pressers 24, 25 are placed at the retracted position before the elevator unit 2 is lowered, and returned to the protruding position after the elevator unit 2 is lowered.

Objects softened with superheated steam, which are the object to be strained, i.e., food ingredients, such as vegetables, fruits, or grains, that are separately softened by being exposed to a superheated steam atmosphere inside a heating furnace (not shown), are moved from an appropriate vessel into the supply tray 19, and thereafter manually scraped toward the chute opening 19a in proper amounts by the operation of an appropriate tool (e.g., spatula), dropped into the hollow upper shaft 9 serving also as the input tube, and finally transferred into the bottomed cylindrical vessel 3. The object to be strained discharged through a lower end opening 9a of the shaft 9 into the vessel 3 moves or scatters radially under the centrifugal force generated by the rotation of the vessel 3, and is pressed against the inner surface of the circumferential plate 3a of the vessel 3 at a pressure equivalent to the centrifugal force.

The object to be strained thus pressed against the inner surface of the circumferential plate 3a of the vessel 3 is further rubbed or pressed against the inner surface of the circumferential plate 3a by the pressers 24, 25 in a cycle that is determined by the difference in number of rotations between the vessel 3 and the rotary pressers 24, 25.

Of the filtrates that are protruded or discharged through the holes 3d of the circumferential plate 3a under the pressing pressure of the centrifugal force as well as the pressing pressure or the rubbing force of the pressers 24, 25, some type of filtrate crashes into the inner surface of the circular cylindrical cover body 26 and then free-falls along the inner surface due to its high fluidity; another type of filtrate continues into strings of some length on the outlet side of the holes 3d due to its high viscosity; and yet another type of filtrate crashes into the inner surface of the circular cylindrical cover body 26 and then sticks to the inner surface due to its high adhesive strength.

The type of filtrate that free-falls along the inner surface of the circular cylindrical cover body 26 falls to the collection tray 20 even when the inner surface scraping member 22 is set to the inactivated position. Therefore, such filtrate can be manually scraped toward and dropped into the chute opening 20a using an appropriate tool (e.g., spatula) etc. and thereby accommodated in the drawer-type collection box 21.

The type of filtrate that continues into strings on the outlet side of the holes 3d of the circumferential plate 3a can be scraped off the outer circumferential surface by bringing the scraping blade 23a of the outer surface scraping member 23 into contact with the outer circumferential surface of the circumferential plate 3a of the vessel 3 at an appropriate timing, so that the fallen filtrate is gathered at the chute opening 20a of the collection tray 20 and can be accommodated in the drawer-type collection box 21 in the same manner.

The type of filtrate that crashes into the inner surface of the circular cylindrical cover body 26 and then sticks to the inner surface can be scraped off the inner circumferential surface by bringing the scraping blade 22a of the inner surface scraping member 22 into contact with the inner circumferential surface of the circular cylindrical cover body 26 at an appropriate timing or on a constant basis, so that the fallen filtrate is gathered at the chute opening 20a of the collection tray 20 and can be accommodated in the drawer-type collection box 21 in the same manner.

Through a predetermined commanding operation at the manipulation part 31, the vessel 3 is set to a predetermined rotation speed (e.g., number of rotations N1) in the clockwise direction as seen from above, and the rotary pressers 24, 25 are set to a predetermined rotation speed (e.g., number of rotations N2) likewise in the clockwise direction. Here, the expression N1 ≠ N2 holds, and ΔN obtained by N1 - N2 is the rotation speed of the rotary pressers 24, 25 relative to the circumferential plate 3a of the vessel 3. Thus, the vessel 3 and the pressers 24, 25 are automatically led to the set speeds by the workings of the control part 30.

The number of rotations N1 of the vessel 3 directly affects the centrifugal force applied to the object to be strained. It is therefore necessary to set the number of rotations N1 of the vessel 3 in consideration of the ease with which the object to be strained passes through the filtering holes 3d of the circumferential plates 3a. For objects to be strained that have high viscosity or high fiber content, as they generally tend not to easily pass through the filtering holes 3d, the number of rotations N1 of the vessel 3 is set to a larger number to produce a large centrifugal force. By contrast, for objects to be strained that have low viscosity or low fiber content, as they generally tend to easily pass through the filtering holes 3d, the number of rotations N1 of the vessel 3 can be set to a smaller number.

On the other hand, for the number of rotations N2 of the rotary pressers 24, 25, ΔN obtained by N1 - N2 corresponds to the rotation speed of the rotary pressers 24, 25 relative to the circumferential plate 3a of the vessel 3, and this relative rotation speed also corresponds to the cycle in which the rotary pressers 24, 25 rub the surface of the circumferential plate 3a, on which the object to be strained has deposited, while pressing that surface. The clogging of the filtering holes 3d tends to be eliminated in the part rubbed by the rotary pressers. Thus, the cycle of rubbing of the circumferential plate 3a can also be understood as, in other words, the duration in which the object to be strained present in a certain part of the circumferential plate is continuously pressed against the circumferential plate under the centrifugal force.

However, this does not necessarily mean that shortening the cycle of rubbing the circumferential plate 3a will eliminate clogging and improve the efficiency of the straining process. This is because shortening the cycle of rubbing the circumferential plate 3a may result in quality alteration or deterioration of the object to be strained due to frictional heat caused by a rise in relative speed between the rotary pressers 24, 25 and the circumferential plate 3a.

Moreover, in the case of the object to be strained that is plant food ingredients heated in a superheated steam atmosphere under almost oxygen-free conditions, most of the cells remain without being destructed, and therefore consideration should be paid in the straining process so that the cells remain intact as much as possible. Here, it has been found that cell destruction occurs mostly when the circumferential plate 3a is rubbed by the rotary pressers 24, 25. Accordingly, it is not preferable in terms of prevention of cell destruction that the circumferential plate is too frequently rubbed by the pressers. Actually, in the case of the object to be strained that has been treated with superheated steam, it has been found that a high-quality strained object (puree food product) can be obtained if the cycle of rubbing by the pressers is set to be longer such that the filtrate is pushed out through the filtering holes in the form of continuous strings, because the cells of the obtained strained object remain without being destructed and the colors and the tastes of the ingredients are retained intact.

According to the strainer of the present invention that uses the bottomed cylindrical vessel 3 and the rotary pressers 24, 25, a desired centrifugal force and a desired rubbing cycle can be realized by adjusting the number of rotations (N1, N2). Thus, it is possible to easily realize a straining process under the optimal conditions for various objects to be strained with different physical properties.

The present inventors conducted an operation test, in which, on the assumption that the bottomed cylindrical vessel 3 and the rotary pressers 24, 25 are rotated in the same direction, the number of rotations of the bottomed cylindrical vessel 3 was set to a range of 200 to 400 rotations per minute, and the number of rotations of the rotary pressers 24, 25 was set to be smaller than that by about 50 to 200 rotations per minute such that the vessel 3 overtakes the pressers 24, 25. In this case, it has been found that a quality puree food product can be efficiently obtained with the object to be strained having expected physical properties.

To name one specific example, in the case where the present invention is applied to fruits softened with superheated steam that have high water content and low viscosity (e.g., melons, strawberries, raspberries, blueberries, etc.), it has been confirmed that a puree food product can be efficiently manufactured, without causing the clogging of the vessel 3, if the number of rotations of the vessel 3 is set to 250 to 400 rotations per minute, at which a sufficient pressing pressure by the centrifugal force can be obtained, and the number of rotations of the pressers 24, 25 is set to 50 to 150 rotations per minute.

Moreover, in the case where the present invention is applied to objects softened with superheated steam that have low water content and comparatively high hardness and low viscosity (e.g., sweet potatoes, potatoes, etc.), it has been confirmed that a puree food product can be efficiently manufactured, without causing the clogging of the vessel 3, if the number of rotations of the vessel 3 is set to 200 to 300 rotations per minute, at which a sufficient pressing pressure by the centrifugal force can be obtained, and the number of rotations of the pressers 24, 25 is set to 50 to 150 rotations per minute.

In the above embodiment, two rotary pressers are described, but there may be any number of rotary pressers. However, if a plurality of rotary pressers are disposed at equiangular intervals, the rotation is well balanced and the contact of the rotary pressers with the inner circumferential surface of the circumferential plate is stabilized.

In the above embodiment, the cover body 26 has a circular cylindrical shape. However, if the object to be strained is an object having high fluidity, such as strawberries, that does not require scraping of the inner circumferential surface, it is not absolutely necessary that the cross-sectional shape of the cover body is circular.

In the above embodiment, the cover body 26 and the disc-shaped lid plate 27 are coupled together and rotated integrally. However, what is essential is that, when rotating, the cover body 26 is in contact with the scraping member 22 and the scraping action is performed. Therefore, the cover body 26 may be rotated by another rotation driving system.

In the above embodiment, the upper shaft 9 has not only the rotary motion transmitting function but also the food ingredient inputting function. However, an input opening through which food ingredients are input into the vessel 3 may be of course separately provided, and the upper shaft 9 may be dedicated to the rotary motion transmitting function.

In the above embodiment, when the vessel 3 and the pressers 24, 25 are rotated in the same direction, the rotation speed of the pressers 24, 25 is set to be lower than the rotation speed of the vessel 3 such that the vessel 3 overtakes the pressers 24, 25. However, what is essential is that there is a relative speed between the vessel 3 and the pressers 24, 25. Therefore, if there is extra motive power or extra electrical power, the rotation speed of the pressers 24, 25 may be set to be higher than the rotation speed of the vessel 3. Nevertheless, if the rotation speed of the pressers 24, 25 is set to be lower than the rotation speed of the vessel 3, the scattering of a rubbed-off extra portion of the object to be strained can be suppressed as much as possible, since the rubbing direction is the direction in which the rotation decelerates.

In the above embodiment, the axes of the vessel 3 and the pressers 24, 25 are perfectly vertical. However, it goes without saying that a modification of, for example, appropriately inclining the axes toward the near side in view of the ease of work is included in the meaning of the term vertical.

In the above embodiment, the object to be strained is supplied into the vessel 3 through the supply tray 19 and the upper shaft 9 serving also as the input tube. However, the object to be strained may be supplied into the vessel 3 through a hose from a food ingredient conveying pump.

As has been clarified by the above description, the method according to the present invention is the method for operating the strainer including: the vertical, bottomed cylindrical vessel (3) that is supported so as to be rotatable around the central axis and has the filtering holes (3d) bored in the circumferential plate (3a) thereof; the rotary pressers (24, 25) that are located inside the bottomed cylindrical vessel and supported so as to be rotatable around the central axis while being in contact with or closer to the inner circumferential surface of the circumferential plate; and the filtrate catching member (26) that catches a filtrate discharged through the filtering holes of the bottomed cylindrical vessel to the outside of the vessel, the method including the step of, while rotating the bottomed cylindrical vessel, which contains an object to be strained input therein, in a predetermined rotation direction at the first rotation speed (N1), rotating the rotary pressers in the same rotation direction as the bottomed cylindrical vessel at the second rotation speed (N2) between which and the first rotation speed there is the predetermined speed difference (AN). Thus, the rotary pressers move in the same direction as or the opposite direction from the predetermined rotation direction relative to the inner circumferential surface of the circumferential plate of the bottomed cylindrical vessel, at a speed equivalent to the speed difference between the first rotation speed and the second rotation speed. Accordingly, to whichever value the first rotation speed may be set to produce a centrifugal force corresponding to a desired pressing pressure, any cycle of rubbing the inner circumferential surface of the circumferential plate can be set as long as only the second rotation speed is set properly. Thus, it is possible to eliminate the clogging of the filtering holes and maintain the optimal straining effect by scraping the inner circumferential surface of the circumferential plate having the filtering holes in proper cycles, while maintaining the optimal pressure and duration of pressing the food ingredients against the inner circumferential surface of the circumferential plate.

### Industrial Applicability

The present invention can be used, for example, for the process of producing a liquid or puree food product that retains the original functions of the food ingredients or exhibits new functions by passing through a strainer and straining food ingredients (e.g., fruits, vegetables, grains, etc.) that have been softened by heating in superheated steam under oxygen-free or low-oxygen conditions.

### Reference Signs List

- 1: Strainer processing part
- 2: Elevator unit
- 3: Bottomed cylindrical vessel
- 3a: Circumferential plate
- 3b: Inward flange
- 3c: Bracket
- 3d: Hole
- 4: Lower shaft
- 5: Thrust bearing
- 6: Driven pulley
- 7: Timing belt
- 8: Servomotor (M1)
- 9: Upper shaft (input tube)
- 9a: Input opening
- 10: Driven pulley
- 11: Timing belt
- 12: Driving pulley
- 13: Servomotor (M2)
- 14: Elevator platform
- 15: Guide rod
- 16: Guide sleeve
- 17: Servomotor (M3)
- 18: Ball screw mechanism
- 19: Supply tray
- 19a: Chute opening
- 20: Collection tray
- 20a: Chute opening
- 21: Collection box
- 22: Inner surface scraping member
- 22a: Scraping blade
- 23: Outer surface scraping member
- 23a: Scraping blade
- 24: Rotary presser
- 24a: Curved guide surface having arc-shaped cross-section
- 24b: Guide groove
- 25: Rotary presser
- 25a: Curved guide surface having arc-shaped cross-section
- 25b: Guide groove
- 25c: Flat surface
- 25d: Straight edge
- 26: Circular cylindrical cover body
- 27: Lid plate
- 28: Coupling bar
- 29: Arc-shaped guide slot
- 29a: Pin
- 30: Control part
- 31: Manipulation part
- 100: Strainer
- A: Arrow indicating ascending and descending directions

## Claims

1. A method for operating a strainer, the strainer including:
a vertical, bottomed cylindrical vessel that is supported so as to be rotatable around a central axis and has filtering holes bored in a circumferential plate thereof;
a rotary presser that is located inside the bottomed cylindrical vessel and supported so as to be rotatable around the central axis while being in contact with or closer to an inner circumferential surface of the circumferential plate; and
a filtrate catching member that catches a filtrate discharged through the filtering holes of the bottomed cylindrical vessel to the outside of the vessel,
the method comprising the step of, while rotating the bottomed cylindrical vessel, which contains an object to be strained input therein, in a predetermined rotation direction at a first rotation speed, rotating the rotary presser in the same rotation direction as the bottomed cylindrical vessel at a second rotation speed different from the first rotation speed by a predetermined speed difference.

2. The strainer operation method according to claim 1, wherein the second rotation speed is lower than the first rotation speed.

3. The strainer operation method according to claim 1 or 2, wherein
the first rotation speed is set such that a centrifugal force generated by the rotation exerts a pressing pressure, which is suitable for the object to be strained, on the object to be strained toward the inner circumferential surface of the circumferential plate, and
the speed difference between the first rotation speed and the second rotation speed is set such that, when the rotary presser and the inner circumferential surface of the circumferential plate slide over each other with that speed difference, the duration of the pressing pressure corresponds to a duration suitable for the object to be strained.

4. A puree food product manufacturing method in which a puree food product as the filtrate is obtained by implementing the strainer operation method according to claim 1 on the object to be strained that is softened food ingredients produced by exposing vegetables, fruits, and/or grains to a superheated steam atmosphere.

5. An automatic strainer device comprising:
a vertical, bottomed cylindrical vessel that is supported so as to be rotatable around a central axis and has filtering holes bored in a circumferential plate thereof;
a rotary presser that is located inside the bottomed cylindrical vessel and supported so as to be rotatable around the central axis while being in contact with or closer to an inner circumferential surface of the circumferential plate;
a filtrate catching member that catches a filtrate discharged through the filtering holes of the bottomed cylindrical vessel to the outside of the vessel;
a first rotation driving source that can rotate the bottomed cylindrical vessel in a predetermined direction;
a second rotation driving source that can rotate the rotary presser in the same direction as the bottomed cylindrical vessel;
a manipulation part that specifies the rotation speed of the bottomed cylindrical vessel and the rotation speed of the rotary presser; and
a control part that controls the rotation speed of the bottomed cylindrical vessel and the rotation speed of the rotary presser to the speeds specified by the manipulation part.

6. The automatic strainer device according to claim 5, wherein the rotary presser is configured to exert the effect of pressing the object to be strained against an inner circumferential surface of the circumferential plate due to a difference in rotation speed between the rotary presser and the bottomed cylindrical vessel.

7. The automatic strainer device according to claim 6, wherein the rotary presser has a straight edge that is in contact with or closer to the inner circumferential surface of the circumferential plate, and a curved guide surface that continues to the straight edge and has an arc shape in cross-section extending along the inner circumferential surface of the circumferential plate while gradually separating from the inner circumferential surface.

8. The automatic strainer device according to claim 7, wherein a spiral guide groove is formed in the curved guide surface.

9. The automatic strainer device according to claim 5, further comprising an object-to-be-strained input tube that is coaxial with the central axis of the bottomed cylindrical vessel, is suspended from above the bottomed cylindrical vessel into the vessel, and serves also as a rotating shaft of the rotary presser, wherein the second rotation driving source rotates the rotary presser through the input tube.

10. The automatic strainer device according to claim 9, wherein the rotary presser is provided at a lower end part of the object-to-be-strained input tube, and mounted on a lower surface of a lid plate that closes the upper opening of the bottomed cylindrical vessel.

11. The automatic strainer device according to claim 9, wherein a supply tray that serves as a receiver of the object to be strained and has a chute opening leading to an upper end opening of the input tube is provided at an upper end part of the input tube.

12. The automatic strainer device according to claim 5, wherein there are a plurality of rotary pressers, and the plurality of rotary pressers are disposed at equiangular intervals along the inner circumference of the bottomed cylindrical vessel.

13. The automatic strainer device according to claim 5, wherein the filtrate catching member includes a shield body with an open bottom that surrounds the outer circumference of the bottomed cylindrical vessel with an appropriate clearance therebetween and prevents the scattering of a filtrate discharged through the filtering holes, and a collection tray that serves as a receiver of the filtrate falling through the bottom opening of the shield body.

14. The automatic strainer device according to claim 13, wherein
the shield body has a circular cylindrical shape with an open bottom and is supported so as to rotate coaxially with the rotary presser, and
an inner surface scraping member is fixed at a predetermined position along the inner circumference of the shield body such that a scraping blade thereof slides along an inner circumferential surface of the shield body.

15. The automatic strainer device according to claim 14, wherein the fixing position of the inner surface scraping member corresponds to the chute opening of the collection tray.

16. The automatic strainer device according to claim 13, wherein an outer surface scraping member is fixed at a predetermined position along the outer circumference of the bottomed cylindrical vessel such that a scraping blade thereof slides along an outer circumferential surface of the bottomed cylindrical vessel.

17. The automatic strainer device according to claim 16, wherein the fixing position of the outer surface scraping member corresponds to the chute opening of the collection tray.
